# EUROPÄISCHE PATENTSCHRIFT

(11) **EP 3 194 221 B1**
(45) Veröffentlichungstag und Bekanntmachung des Hinweises auf die Patenterteilung: **31.10.2018**
(21) Anmeldenummer: 15756395.8
(22) Anmeldetag: 27.08.2015
(51) Int. Cl.: B60T 7/04, B60T 15/04

(54) **BETRIEBSBREMSPEDALEINRICHTUNG MIT ÜBER EINE STELLSCHRAUBE STUFENLOS VORSPANNBARER SCHRAUBENFEDER**
SERVICE BRAKE PEDAL DEVICE WITH A HELICAL SPRING WHICH CAN BE BIASED IN A CONTINUOUS MANNER VIA AN ADJUSTMENT SCREW
DISPOSITIF À PÉDALE DE FREIN DE SERVICE MUNI D'UN RESSORT HÉLICOÏDAL PRÉCONTRAINT PROGRESSIVEMENT PAR UNE VIS DE RÉGLAGE

(30) Priorität: 19.09.2014 DE 102014013941
(43) Veröffentlichungstag der Anmeldung: 26.07.2017
(73) Patentinhaber: KNORR-BREMSE Systeme für Nutzfahrzeuge GmbH, 80809 München (DE)
(72) Erfinder: RÖTHER, Friedbert, 74389 Cleebronn (DE); SCHMAUDER, Thilo, 71732 Tamm (DE); SCHABINGER, Simon, 75245 Neulingen (DE); WÖRNER, Ralf, 75233 Tiefenbronn (DE)
(86) Internationale Anmeldenummer: PCT/EP2015/069576
(87) Internationale Veröffentlichungsnummer: WO 2016/041753

(56) Entgegenhaltungen:
- DE-A1-102010 051 812
- DE-T2- 69 818 221
- FR-A1- 2 913 119

## Beschreibung

Die Erfindung geht aus von einer Betriebsbremspedaleinrichtung einer elektro-pneumatischen oder elektrischen Bremseinrichtung eines Fahrzeugs gemäß dem Oberbegriff von Anspruch 1.

Eine Betriebsbremspedaleinrichtung ist beispielsweise aus WO 2012/076514 A1, aus DE 198 52 399 A1 oder aus DE 10 2010 051 812 B4 bekannt. Dort stützt jeweils eine Schraubenfederanordnung den Kolben an einem ein Doppelsitzventil betätigenden Ventilkolben axial ab. Solche Betriebsbremspedaleinrichtungen werden in rein elektrischen oder elektro-pneumatischen Betriebsbremseinrichtungen von modernen Nutzfahrzeugen eingesetzt. Eine gattungsgemäße Betriebsbremspedaleinrichtung wird in DE 698 18 221 T2 offenbart.

Bei rein elektrischen Betriebsbremseinrichtungen ist wenigstens ein elektrischer Bremskreis vorhanden, mit wenigstens einem in der Betriebsbremspedaleinrichtung integrierten elektrischen Bremswertgeber, welcher abhängig von einer Betätigung des Betriebsbremspedals ein elektrisches Betriebsbremsanforderungssignal erzeugt, welches in ein elektronisches Bremssteuergerät eingesteuert wird, das abhängig von dem Betriebsbremsanforderungssignal Stellbefehle für elektrische Bremsaktuatoren erzeugt.

Bei elektro-pneumatischen Betriebsbremseinrichtungen ist indes ein vorrangiger elektro-pneumatischer Betriebsbremskreis vorhanden, welchem ein elektrischer Kanal der Betriebsbremspedaleinrichtung bzw. Fußbremsmoduls (FBM) zugeordnet ist, d.h. mit Betätigung des Betriebsbremspedals erzeugt ein in der Betriebsbremspedaleinrichtung angeordneter elektrischer Bremswertgeber (Sensoreinrichtung plus Auswerteelektronik) ein elektrisches Betriebsbremsanforderungssignal, welches in ein elektronisches Bremssteuergerät eingesteuert wird, um durch eine entsprechende Ansteuerung von Magnetventilen bzw. Druckregelmodulen einen dem Betriebsbremsanforderungssignal entsprechenden pneumatischen Bremsdruck in pneumatische Betriebsbremszylinder einzusteuern. Parallel hierzu bewirkt die Betätigung des Betriebsbremspedals, dass ein mit diesem durch eine Stößel/Stößelaufnahme verbundener Kolben über eine Druckfeder einen Relaiskolben betätigt, welcher wiederum ein Doppelsitzventil der Betriebsbremspedaleinrichtung steuert, um einen der Bremsanforderung entsprechenden pneumatischen Steuerdruck in wenigstens einem pneumatischen Kanal der Betriebsbremspedaleinrichtung zu erzeugen, der dann in nachrangigen, rein pneumatischen Betriebsbremskreisen einen Bremsdruck in den Bremszylindern bilden, wenn der vorrangige elektro-pneumatische Betriebsbremskreis aufgrund eines Defekts ausgefallen ist.

Um die Betätigungskraft vom Kolben auf den das Doppelsitzventil betätigenden Ventilkolben zu übertragen und gleichzeitig dem Fahrer ein der Betätigung des Betriebsbremspedals entsprechendes Druckgefühl an seinem Fuß zu vermitteln, ist dann die Schraubenfederanordnung vorgesehen, welche den Kolben an dem das Doppelsitzventil betätigenden Ventilkolben axial abstützt.

Um die Vorspannung dieser Schraubenfederanordnung variieren zu können, werden beim Stand der Technik zwischen dem Gehäuseabschnitt bzw. dem Ventilkolben und einem Ende einer Schraubenfeder der Schraubenfederanordnung in der Regel Scheiben bestimmter Dicke eingelegt. Zur Veränderung bzw. Anpassung der Vorspannung der wenigstens einen Schraubenfeder wird dann die Scheibe ausgewechselt bzw. eine weitere Scheibe eingelegt oder entfernt.

Der vorliegenden Erfindung liegt die Aufgabe zugrunde, eine Betriebsbremspedaleinrichtung der eingangs erwähnten Art derart fortzubilden, dass auf möglichst einfache Weise die Vorspannung der Schraubenfederanordnung angepasst werden kann.

Diese Aufgabe wird erfindungsgemäß durch die Merkmale von Anspruch 1 gelöst.

### Offenbarung der Erfindung

Die Erfindung geht aus von einer Betriebsbremspedaleinrichtung einer elektro-pneumatischen oder elektrischen Bremseinrichtung eines Fahrzeugs, mit einem Betriebsbremspedal, einem mit dem Betriebsbremspedal verbundenen Stößel, einem Gehäuse, einem in dem Gehäuse axial beweglich gelagerten Stösselkolben mit einer Stößelaufnahme, in welche der Stößel eingreift, eine Schraubenfederanordnung, welche den Stösselkolben an einem ein Doppelsitzventil betätigenden Ventilkolben oder an einem Gehäuseabschnitt axial abstützt, wobei die Vorspannung der Schraubenfederanordnung mittels einer Stellschraube einstellbar ist.

Erfindungsgemäß ist vorgesehen, dass ein Außengewinde aufweisender Stellschraubenschaft der Stellschraube eine Durchgangsbohrung eines Federtellers durchragend in ein Innengewinde eingeschraubt ist, welches mit dem Stösselkolben, dem Ventilkolben oder dem Gehäuseabschnitt in Verbindung steht, ein Stellschraubenkopf der Stellschraube an der Schulter der Durchgangsbohrung des Federtellers anliegt, und sich die wenigstens eine Schraubenfeder an dem Federteller abstützt, welcher in Bezug auf den Ventilkolben, den Stösselkolben oder den Gehäuseabschnitt axialkraftübertragend angeordnet ist.

Mit anderen Worten steht gemäß einer ersten Alternative das Innengewinde mit dem Stösselkolben in Verbindung oder ist an diesem ausgebildet und der Federteller ist in Bezug auf den Ventilkolben oder den Gehäuseabschnitt axialkraftübertragend angeordnet, während gemäß einer zweiten Alternative das Innengewinde mit dem Ventilkolben oder dem Gehäuseabschnitt in Verbindung steht oder an diesem ausgebildet ist und der Federteller in Bezug auf den Stösselkolben axialkraftübertragend angeordnet ist. In Bezug zu einer vertikalen Gebrauchslage der Betriebsbremspedaleinrichtung kann daher der Stellschraubenkopf der Stellschraube eine obere oder untere Lage einnehmen bzw. auch um 180 Grad verdreht eingebaut sein.

Unter axialkraftübertragend soll verstanden werden, dass beispielsweise aufgrund eines direkten oder indirekten Kontakts des Federtellers mit dem Ventilkolben bzw. mit dem Stösselkolben eine Übertragung von Axialkräften erfolgt.

Mit Hilfe der Stellschraube kann dann die Vorspannung der Schraubenfederanordnung stufenlos eingestellt werden, womit auf zusätzliche Scheiben verzichtet werden kann. Dies stellt insbesondere eine in einfacher Weise konstruktiv realisierbare Maßnahme dar.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ragt der Schraubenkopf der Stellschraube in eine Bohrung des Ventilkolbens oder des Stösselkolbens hinein und ist in dieser Bohrung axial beweglich geführt. Wenn daher eine Betätigungskraft auf den Stösselkolben ausgeübt wird und sich dieser dann in der vertikalen Gebrauchslage der Betriebsbremspedaleinrichtung unter Zusammenpressen der Schraubenfederanordnung nach unten bewegt, dann findet ein axialer Längenausgleich dadurch statt, dass sich der Stellschraubenkopf in dieser Bohrung axial bewegt und der Stellschraubenkopf der Stellschraube nicht mehr länger an der Schulter der Durchgangsbohrung des Federtellers anliegt. Die Tiefe der Bohrung ist daher an einen maximalen Hub des Stösselkolbens angepasst bzw. sie stellt eine Durchgangsbohrung dar. Durch die (Gleit-) Führung des Stellschraubenkopfes in der Bohrung ergibt sich außerdem eine weitere Führungsfläche für den Stösselkolben in Form der radial inneren Umfangsfläche der Bohrung.

Eine besonders einfache Fertigung ergibt sich, wenn die Stellschraube, der Federteller, der Stösselkolben, der Ventilkolben und die Schraubenfederanordnung koaxial angeordnet sind.

Besonders bevorzugt kann zwischen dem Federteller und dem Ventilkolben oder dem Stösselkolben ein auswechselbares Distanzelement angeordnet sein. Durch ein solches Distanzelement kann dann die axiale Länge der Schraubenfederanordnung bzw. deren axiale Einbaumaße konstant gehalten werden, auch wenn die Vorspannung der Schraubenfederanordnung durch Verstellen der Stellschraube verändert wurde. Dies ist vor allem im Hinblick auf das Zusammenwirken des Ventilkolbens mit dem Doppelsitzventil von Vorteil.

Gemäß einer Weiterbildung weist die Schraubenfederanordnung mehrere parallel angeordnete Schraubenfedern auf.

Gemäß einer Weiterbildung kann dann vorgesehen sein, dass wenigstens eine erste Schraubenfeder durch die Stellschraube vorgespannt und wenigstens eine zweite Schraubenfeder mit ihrem einen Ende an dem Federteller oder an dem Stösselkolben abgestützt ist, aber mit ihrem anderen Ende erst nach Zurücklegen eines bestimmten Anlegehubs des Stösselkolbens an dem Stösselkolben oder an dem Federteller zur Anlage kommt. Dadurch kann eine Betätigungskraft/Betätigungsweg-Kennlinie erzeugt werden, bei welcher die Betätigungskraft ab einem bestimmten Betätigungsweg, -hub oder -winkel des Betriebsbremspedals die Steigung ändert.

Bei einer solchen Betriebsbremspedaleinrichtung wird innerhalb des elektrischen Kanals insbesondere der axiale Betätigungsweg oder der axiale Hub des Stösselkolbens mittels einer induktiven Wegmesseinrichtung gemessen, wobei dieser axiale Hub dann das Bremsanforderungssignal repräsentiert. Dann umschließt wenigstens eine Magnetspule der induktiven Wegmesseinrichtung den Stösselkolben. Insbesondere sind zwei axial hintereinander angeordnete Magnetspulen vorhanden.

Dabei ist es oft unvermeidbar, dass außer der z.B. aus Aluminium gefertigte Stösselkolben auch wenigstens ein Teil der wenigstens einen Schraubenfeder von der wenigstens einen Magnetspule umschlossen ist. In diesem Fall ist es von Vorteil, die Schraubenfeder(n) aus paramagnetischem Material und insbesondere aus austenitischem Material zu fertigen, weil dann eine durch das Zusammenpressen der Schraubenfeder(n) beim Betätigungshub hervorgerufene Bewegung der wenigstens einen Schraubenfeder innerhalb der wenigstens einen Magnetspule das Messsignal der induktiven Wegmesseinrichtung nicht beeinflusst wird.

Besonders bevorzugt sind Mittel zum Sichern des aus dem Innengewinde und dem Außengewinde der Stellschraube gebildeten Gewindes vorgesehen, damit ein unbeabsichtigtes Verstellen der Stellschraube vermieden wird. Besonders bevorzugt besteht eine solche Schraubensicherung darin, dass das aus dem Innengewinde und dem Außengewinde der Stellschraube gebildete Gewindeverbindung eine selbsthemmende Gewindeverbindung darstellt. Stattdessen oder zusätzlich kann eine handelsübliche Schraubensicherung wie z.B. Loctite® verwendet werden.

Die Erfindung betrifft auch eine elektrische oder elektro-pneumatische Betriebsbremseinrichtung eines Fahrzeugs beinhaltend eine oben beschriebene Betriebsbremspedaleinrichtung, wobei eine solche elektrische oder elektro-pneumatische Betriebsbremseinrichtung bereits eingangs beschrieben wurde. Nicht zuletzt betrifft die Erfindung auch ein Fahrzeug, welches eine solche elektrische oder elektro-pneumatische Betriebsbremseinrichtung beinhaltet.

### Zeichnung

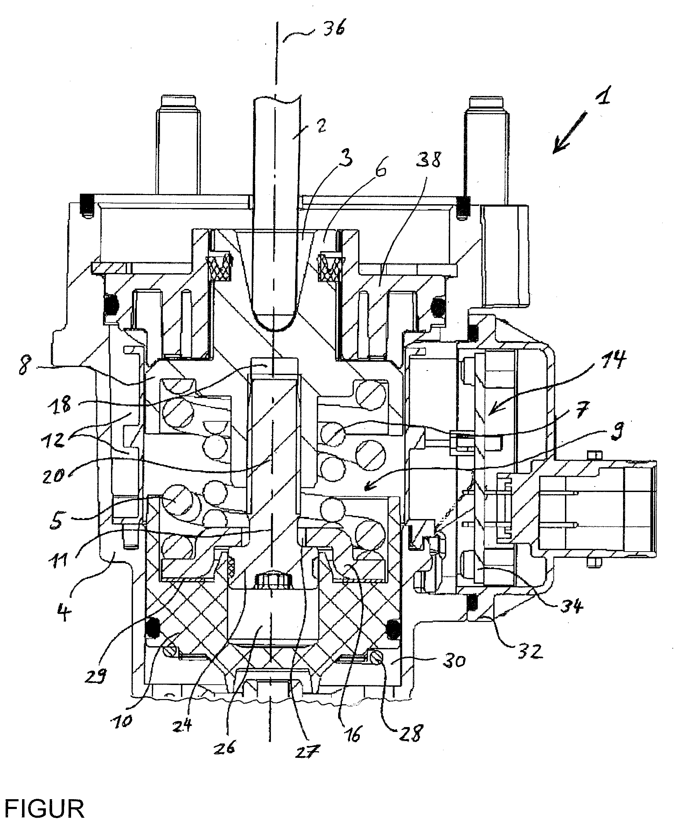

Die Erfindung wird nachstehend anhand eines Ausführungsbeispiels unter Bezugnahme auf die beigefügte Zeichnung näher beschrieben. Es zeigt die einzige Figur einen schematischen Längsschnitt durch eine bevorzugte Ausführungsform eines oberen Teils einer Betriebsbremspedaleinrichtung gemäß der Erfindung.

### Beschreibung des Ausführungsbeispiels

Der in der Figur gezeigte obere Teil einer elektro-pneumatischen Betriebsbremspedaleinrichtung 1 oder eines elektro-pneumatischen Betriebsbremsventils bzw. Fußbremsmoduls als bevorzugtes Ausführungsbeispiel der Erfindung ist Bestandteil einer elektro-pneumatischen Bremseinrichtung eines Nutzfahrzeugs. Die elektro-pneumatische Betriebsbremseinrichtung weist beispielsweise einen elektrischen Bremskreis und zwei pneumatische Betriebsbremskreise auf.

Die Betriebsbremspedaleinrichtung 1 beinhaltet unter anderem einen von einem nicht dargestellten Betriebsbremspedal betätigten Stößel 2, welcher in eine Stößelaufnahme 3 eines in einem Gehäuse 4 axial beweglichen Stößelkolbens 6 eingreift. Der Stößelkolben 6 weist ein Kolbenhemd 8 auf, an welchem eine Schraubendruckfederanordnung 9, die beispielsweise aus zwei parallel und koaxial angeordneten Schraubenfedern besteht, einer ersten, beispielsweise äußeren Schraubenfeder 5 und einer zweiten, beispielsweise inneren Schraubenfeder 7, einendseitig abgestützt ist, welche anderendseitig über einen zwischengeordneten Federteller 16 an einem Ventilkolben 10 abgestützt ist. Der Stößelkolben 6 besteht beispielsweise aus paramagnetischem Material, insbesondere aus Aluminium. Die innere und/oder die äußere Schraubenfeder 5, 7 ist beispielsweise aus einem paramagnetischen Material gefertigt.

In ein Innengewinde einer von der Stößelaufnahme 3 weg weisenden Sacklochbohrung 18 des Stößelkolbens 6 mit einem Außengewinde ihres Stellschraubenschaftes 20 eingeschraubt und zentral und koaxial in Bezug zur Schraubendruckfederanordnung 9 angeordnet ist eine Stellschraube 11 mit ihrem Stellschraubenkopf 24 in einer zum Stößelkolben 6 weisenden Bohrung 26 des Ventilkolbens 10 axial beweglich geführt. Die Führung des Stellschraubenkopfes 24 in der Bohrung 26 des Ventilkolbens 10 besteht beispielsweise in einer axialen Gleitlagerung. Diese Bohrung 26 kann als Durchgangs- oder Sacklochbohrung im Ventilkolben 10 ausgeführt werden.

Die Stellschraube ragt mit ihrem Stellschraubenschaft 20 durch eine zentrale Durchgangsbohrung 27 des Federtellers 16 hindurch, wobei der Stellschraubenkopf 24 an dem Bohrungsrand der Durchgangsbohrung 27 zur Anlage kommt, weil sein Außendurchmesser größer ist als der Innendurchmesser der Durchgangsbohrung 27.

Der Federteller 16 ist dann zwischen dem Ventilkolben 10 und der Schraubenfederanordnung 9 geklemmt. Weiterhin kann zwischen dem Federteller 16 und dem Ventilkolben 10 ein auswechselbares Distanzelement 29 angeordnet sein. Die aus dem Innengewinde der Sacklochbohrung 18 und dem Außengewinde der Stellschraube 11 gebildete Gewindeverbindung ist bevorzugt ein selbsthemmendes Gewinde. Weiterhin bestehen die Schraubenfedern 5, 7 der Schraubenfederanordnung 9 vorzugsweise aus paramagnetischem Material.

Der Ventilkolben 10 ist über eine dritte, in der Figur nur teilweise sichtbare Schraubenfeder 28 an dem Gehäuse 4 abgestützt. Weiterhin begrenzt der Ventilkolben 10 mit seiner von der Schraubenfederanordnung 9 weg weisenden Kolbenfläche eine Arbeitskammer 30, welche über einen Arbeitsanschluss des Gehäuses 4 mit einer zu pneumatischen Radbremszylindern führenden Bremsdruckleitung verbunden ist.

Der Ventilkolben 10 betätigt in bekannter Weise ein hier aus Maßstabsgründen nicht mehr dargestelltes Doppelsitzventil, um den Arbeitsanschluss bzw. die Arbeitskammer entweder mit einer Entlüftung (Fahrstellung) oder mit einem Vorratsanschluss (Bremsstellung) zu verbinden, an welchen eine zu einem Druckluftvorrat führende Vorratsdruckleitung angeschlossen ist. Der Arbeitsanschluss steht über eine pneumatische Druckleitung des pneumatischen Betriebsbremskreises mit einem pneumatischen Anschluss eines Druckregelmoduls in Verbindung, welche den pneumatischen Betriebsbremskreis über ein integriertes Backup-Magnetventil an pneumatische Betriebsbremszylinder weiter schleift. Die Arbeitskammer ist daher je nach Betätigungs- und/oder Regelzustand des Doppelsitzventils entweder mit einer Entlüftung oder mit einem Druckluftvorrat oder mit keinem von beiden verbunden.

Ferner ist einen Teil einer Signaleingabevorrichtung bildender beispielsweise berührungsloser und nach induktivem Prinzip funktionierender Wegmessaufnehmer in Form von beispielsweise zwei axial hintereinander angeordneten induktiven Wegmessspulen 12 im Gehäuse 4 axial im Bereich des Kolbenhemds 8 des Stößelkolbens 6 angeordnet, wobei die Wegmessspulen 12 an eine in einem an das Gehäuse 4 an einem Umfangsabschnitt angeflanschten Elektronikgehäuse 32 angeordneten Auswerteelektronik 14 elektrisch leitend verbunden ist. Die Komponenten der Auswerteelektronik sind auf einer Platine 34 angeordnet, welche im eingebauten Zustand des Elektronikgehäuses 32 beispielsweise parallel zu einer Mittelachse 36 der Betriebsbremspedaleinrichtung 1 ist.

Die Wegmessspulen 12 umschließen insbesondere das Kolbenhemd 8 des Stößelkolbens 6, die Schraubenfederanordnung 9 und die Stellschraube 11 ringförmig und sind dabei innerhalb des Gehäuses 4 ortsfest angeordnet. Die Wegmessspulen 12 sind dadurch mit der Auswerteelektronik 14 elektrisch verbindbar, ohne dass eine solche Verbindung selbst einer Lageänderung unterliegt.

Ein oberer Anschlag für den Stößelkolben 6 kann durch einen Führungskörper 38 gebildet werden, der in dem Gehäuse 4 kopfseitig gehalten und in dessen zentraler Bohrung der Stößelkolben 6 dichtend geführt ist.

Dabei sind das Gehäuse 4, der Stößel 2, der Stößelkolben 6, der Federteller 16, die Schraubenfederanordnung 9, der Ventilkolben 10, die Stellschraube 11 und der Führungskörper 38 im Wesentlichen, d.h. gegebenenfalls mit konstruktiv bedingt lokal abweichenden Ausformungen wie etwa durch das Elektronikgehäuse 32 bedingt, koaxial mit der Mittelachse 36 angeordnet.

Eine obere Endposition des Stößelkolbens 6, in welcher dieser an den Führungskörper 38 anschlägt, markiert dann den Fahrzustand mit gelöster Betriebsbremse, bei welchem der Ventilkolben 10 von einem im Gehäuse 4 axial geführten Ventilkörper des Doppelsitzventils abgehoben ist und dadurch Druckluft vom Arbeitsanschluss über die Arbeitskammer in die Entlüftung strömen kann, was eine Entlüftung des pneumatischen Betriebsbremskreises nach sich zieht. Die Wegmessspulen 12 erzeugen dabei ein entsprechendes elektrisches (Fahrstellungs-) Betriebsbremsanforderungssignal, welches von der Auswerteelektronik ausgewertet wird.

Wenn der Fahrer dann ausgehend vom Fahrzustand mit dem Fuß die Betriebsbremsplatte betätigt, bewegt sich dadurch der Stößel 2 und damit auch der Stößelkolben 6 axial nach unten. Diese Bewegung wird durch die Vorspannung der ersten Schraubenfeder 5 bis zu einem Anfangshub ausschließlich auf den Ventilkolben 10 und die Schraubenfeder 28 übertragen und ab Einsteuerung des Druckes in der Arbeitskammer auf die erste oder äußere Schraubenfeder 5 übertragen. Wenn dann ein zusätzlicher Hub überwunden wurde, kommt der Stößelkolben 6 an der zweiten oder inneren Schraubenfeder 7 zur Anlage, wodurch sich nun die Bewegung auch auf die zweite Schraubenfeder 7 überträgt.

Da der Ventilkolben 10 über die dritte Schraubenfeder 28 an dem Gehäuse 4 abgestützt ist und im betätigten Zustand mit Druckkraft beaufschlagt wird, werden die beiden Schraubenfedern 5, 7 der Schraubenfederanordnung 9 um einen Kompressionsweg komprimiert, so dass der Stellschraubenkopf 24 der Stellschraube 11 zum Ausgleich um diesen Kompressionsweg in die Bohrung 26 des Ventilkolbens 10 eintaucht, wie anhand der Figur leicht vorstellbar ist.

Die induktiven Wegmessspulen 12 verändern dann, wenn das Kolbenhemd 8 des Stößelkolbens 6 aufgrund einer Betätigung der Betriebsbremsplatte in axialer Richtung tiefer in die Wegmessspulen 12 eintaucht, ihre Induktivität L, was durch die Auswerteelektronik 14 in bekannter Weise detektierbar ist, welche dann mittels einer auf der Platine 34 integrierten Schaltung aus der veränderten Induktivität L der Wegmessspulen 12 ein der axialen Bewegung des Stößelkolbens 6 proportionales elektrisches Betriebsbremsanforderungssignal bildet. Da der Stößelkolben 6 insbesondere aus paramagnetischem Material besteht, schwächt er das von den Wegmessspulen 12 erzeugte Magnetfeld, wenn er in dieses eintaucht.

Die Auswerteelektronik 14 ist über eine digitale Schnittstelle (A/D-Wandler) an eine hier nicht gezeigte Kommunikationsleitung, beispielsweise an einen Datenbus angeschlossen ist, an dem auch ein zentrales elektronisches Bremssteuergerät der elektro-pneumatischen Betriebsbremseinrichtung angeschlossen ist, so dass das elektrische Betriebsbremsanforderungssignal innerhalb des elektrischen Betriebsbremskreises in dieses elektronische Bremssteuergerät eingesteuert wird. In dem Bremssteuergerät kann das Betriebsbremsanforderungssignal dann achsweise oder radweise durch höhere Funktionen wie beispielsweise eine automatische achslastabhängige Bremsdruckregelung, eine Differenzschlupfregelung etc. verändert werden, bevor es in den die Druckregelmodule der Vorderachse bzw. der Hinterachse eingesteuert wird. In den Druckregelmodulen sind lokale Steuergeräte installiert, die dann mittels einer Einlass-/Auslass-Magnetventilkombination, die ein Relaisventil vorsteuert, einen von dem Betriebsbremsanforderungssignal abhängigen Bremsdruck in den zugeordneten pneumatischen Betriebsbremszylinder(n) erzeugen. Mittels eines jeweils in ein solches Druckregelmodul integrierten Drucksensors findet dann eine Regelung des ausgesteuerten Ist-Bremsdrucks durch Angleichung an einen durch das Betriebsbremsanforderungssignal repräsentierten Soll-Bremsdruck statt.

Um die Vorspannung der Schraubenfederanordnung 9 einzustellen, wird dann einfach die Stellschraube 11 in dem Innengewinde des Stößelkolbens 6 verdreht. Hierzu weist der Stellschraubenkopf 24 eine Ansatzfläche für ein Werkzeug, insbesondere für einen Torxschlüssel auf, wobei das Werkzeug über das andere Ende der Durchgangsbohrung 26 auch in montiertem Zustand eingeführt werden kann.

Die Erfindung ist nicht auf das oben beschriebene Ausführungsbeispiel beschränkt. Gemäß einer weiteren, hier nicht gezeugten Ausführungsform kann sie auch beispielsweise in einer rein elektrischen Betriebsbremspedaleinrichtung 1 einer elektrischen Bremseinrichtung ausgebildet sein, welche lediglich über wenigstens einen elektrischen Kanal verfügt. In diesem Fall ist dann weder ein Ventilkolben 10 noch ein Doppelsitzventil vorhanden. Anstatt an dem Ventilkolben 10 ist dann die Schraubenfederanordnung 9 an einem Boden oder an einer Innenwandung (Gehäuseabschnitt) des Gehäuses 4 abgestützt, welcher dann die Bohrung 26 für den Längsausgleich und die Führung des Stellschraubenkopfes 24 aufweist.

Gemäß einer weiteren, hier nicht gezeigten Ausführungsform kann die Stellschraube 11 in Bezug zur Figur um 180 Grad gedreht angeordnet sein, wobei dann der Stellschraubenkopf 24 bezogen auf die Gebrauchslage in der Figur oben angeordnet ist. Dann ist das Innengewinde zum Einschrauben des Stellschraubenschafts 20 an dem Ventilkolben 10 bzw. am Boden oder einer Innenwandung (Gehäuseabschnitt) des Gehäuses 4 ausgebildet und der Stellschraubenkopf 24 dann in einer im Stößelkolben 6 ausgebildeten Bohrung 26 geführt.

Im Rahmen der Erfindung liegt auch jede mögliche Kombination von Merkmalen der oben beschriebenen Ausführungsbeispiele.

### Bezugszeichenliste

- 1: Betriebsbremspedaleinrichtung
- 2: Stößel
- 3: Stößelaufnahme
- 4: Gehäuse
- 5: erste Schraubenfeder
- 6: Stößelkolben
- 7: zweite Schraubenfeder
- 8: Kolbenhemd
- 9: Schraubenfederanordnung
- 10: Ventilkolben
- 11: Stellschraube
- 12: Wegmessspulen
- 14: Auswerteelektronik
- 16: Federteller
- 18: Sacklochbohrung
- 20: Stellschraubenschaft
- 24: Stellschraubenkopf
- 26: Bohrung
- 27: Durchgangsbohrung
- 28: dritte Schraubenfeder
- 29: Distanzelement
- 30: Arbeitskammer
- 32: Elektronikgehäuse
- 34: Platine
- 36: Mittelachse
- 38: Führungskörper

## Patentansprüche

1. Betriebsbremspedaleinrichtung (1) für eine elektro-pneumatische oder elektrische Bremseinrichtung eines Fahrzeugs, mit einem Betriebsbremspedal, einem mit dem Betriebsbremspedal verbundenen Stößel (2), einem Gehäuse (4), einem in dem Gehäuse (4) axial beweglich gelagerten Stösselkolben (6) mit einer Stößelaufnahme (3), in welche der Stößel (2) eingreift, eine Schraubenfederanordnung (9), welche den Stösselkolben (6) an einem ein Doppelsitzventil betätigenden Ventilkolben (10) oder an einem Gehäuseabschnitt axial abstützt, wobei
a) die Vorspannung der Schraubenfederanordnung (9) mittels einer Stellschraube (11) einstellbar ist,
**dadurch gekennzeichnet, dass**
b) ein Außengewinde aufweisender Stellschraubenschaft (20) der Stellschraube (11) eine Durchgangsbohrung (27) eines Federtellers (16) durchragend in ein Innengewinde eingeschraubt ist, welches mit dem Stösselkolben (6), dem Ventilkolben (10) oder dem Gehäuseabschnitt in Verbindung steht,
c) ein Stellschraubenkopf (24) der Stellschraube (11) am Rand der Durchgangsbohrung (27) des Federtellers (16) in Fahrstellung anliegt,
d) sich die Schraubenfederanordnung (9) an dem Federteller (16) abstützt, welcher in Bezug auf den Ventilkolben (10), den Stösselkolben (6) oder den Gehäuseabschnitt axialkraftübertragend angeordnet ist.

2. Betriebsbremspedaleinrichtung nach Anspruch 2, **dadurch gekennzeichnet, dass** der Stellschraubenkopf (24) der Stellschraube (11) in eine Bohrung (26) des Ventilkolbens (10), des Stösselkolbens oder Gehäuseabschnitts hineinragt und in dieser Bohrung (26) axial beweglich geführt ist.

3. Betriebsbremspedaleinrichtung nach einem der vorhergehenden Ansprüche, **dadurch gekennzeichnet, dass** zumindest die Stellschraube (11), der Federteller (16), der Stösselkolben (6), der Ventilkolben (10) und die Schraubenfederanordnung (9) koaxial angeordnet sind.

4. Betriebsbremspedaleinrichtung nach einem der vorhergehenden Ansprüche, **dadurch gekennzeichnet, dass** zwischen dem Federteller (16) und dem Ventilkolben (10) oder dem Stösselkolben (6) ein auswechselbares Distanzelement (29) angeordnet ist.

5. Betriebsbremspedaleinrichtung nach einem der vorhergehenden Ansprüche, **dadurch gekennzeichnet, dass** die Schraubenfederanordnung (9) mehrere parallel angeordnete Schraubenfedern (5, 7) aufweist,

6. Betriebsbremspedaleinrichtung nach Anspruch 5, **dadurch gekennzeichnet, dass** eine erste Schraubenfeder (5) durch die Stellschraube (11) zwischen dem Stösselkolben (6) und dem Federteller (16) stets vorgespannt, aber eine zweite Schraubenfeder (7) mit ihrem einen Ende an dem Federteller (16) abgestützt ist und mit ihrem anderen Ende erst nach Zurücklegen eines bestimmten Hubs des Stösselkolbens (6) an dem Stösselkolben (6) zur Anlage kommt.

7. Betriebsbremspedaleinrichtung nach Anspruch 6, **dadurch gekennzeichnet, dass** die Schraubenfeder (5) und/oder die Schraubenfeder (7) der Schraubenfederanordnung (9) aus paramagnetischem Material besteht.

8. Betriebsbremspedaleinrichtung nach einem der vorhergehenden Ansprüche, **dadurch gekennzeichnet, dass** das aus dem Innengewinde und dem Außengewinde der Stellschraube (11) gebildete Gewindeverbindung eine selbsthemmende Gewindeverbindung ist.

9. Betriebsbremspedaleinrichtung nach einem der vorhergehenden Ansprüche, **dadurch gekennzeichnet, dass** Mittel zum Sichern der aus dem Innengewinde und dem Außengewinde der Stellschraube (11) gebildeten Gewindeverbindung vorgesehen sind.

10. Elektrische oder elektro-pneumatische Betriebsbremseinrichtung eines Fahrzeugs beinhaltend eine Betriebsbremspedaleinrichtung (1) nach einem der vorhergehenden Ansprüche.

11. Fahrzeug beinhaltend eine elektrische oder elektro-pneumatische Betriebsbremseinrichtung nach Anspruch 10.

## Claims

1. Service brake pedal device (1) for an electro-pneumatic or electric brake device of a vehicle, with a service brake pedal, a tappet (2) which is connected to the service brake pedal, a housing (4), a tappet piston (6) that is mounted in the housing (4) in an axially movable manner with a tappet receiving area (3) in which the tappet (2) engages, a helical spring arrangement (9) which axially supports the tappet piston (6) on a valve piston (10) that actuates a double-seat valve or on a housing portion,
wherein
a) the bias of the helical spring arrangement (9) can be adjusted by means of an adjustment screw (11),
**characterized in that**
b) an adjustment screw shaft (20) of the adjustment screw (11) having an outer thread is screwed into an inner thread so as to protrude through a through-bore (27) of a spring plate (16), said shaft being connected to the tappet piston (6), the valve piston (10) or the housing portion,
c) an adjustment screw head (24) of the adjustment screw (11) lies against the margin of the through-bore (27) of the spring plate (16),
d) the helical spring arrangement (9) is braced against the spring plate (16), which is arranged with respect to the valve piston (10), the tappet piston (6) or the housing portion so as to transmit an axial force.

2. Service brake pedal device according to Claim 1, **characterized in that** the adjustment screw head (24) of the adjustment screw (11) protrudes into a bore (26) of the valve piston (10), the tappet piston or the housing portion and is guided in an axially movable manner in this bore (26).

3. Service brake pedal device according to one of the preceding claims, **characterized in that** at least the adjustment screw (11), the spring plate (16), the tappet piston (6), the valve piston (10) and the helical screw arrangement (9) are arranged coaxially.

4. Service brake pedal device according to one of the preceding claims, **characterized in that** an interchangeable spacer (29) is arranged between the spring plate (16) and the valve piston (10) or the tappet piston (6).

5. Service brake pedal device according to one of the preceding claims, **characterized in that** the helical spring arrangement (9) comprises several helical springs (5, 7) arranged in parallel.

6. Service brake pedal device according to Claim 5, **characterized in that** a first helical spring (5) is constantly biased by the adjustment screw (11) between the tappet piston (6) and the spring plate (16), but a second helical spring (7) is braced by its one end against the spring plate (16) and by its other end it comes to bear against the tappet piston (6) only after the travel of a certain stroke of the tappet piston (6).

7. Service brake pedal device according to Claim 6, **characterized in that** the helical spring (5) and/or the helical spring (7) of the helical spring arrangement (9) consists of paramagnetic material.

8. Service brake pedal device according to one of the preceding claims, **characterized in that** the thread connection formed from the inner thread and the outer thread of the adjustment screw (11) is a self-locking thread connection.

9. Service brake pedal device according to one of the preceding claims, **characterized in that** means are provided for locking the thread connection formed from the inner thread and the outer thread of the adjustment screw (11).

10. Electric or electro-pneumatic service brake device of a vehicle containing a service brake pedal device (1) according to one of the preceding claims.

11. Vehicle containing an electric or electro-pneumatic service brake device according to Claim 10.

## Revendications

1. Dispositif (1) à pédale de frein de service pour un dispositif de freinage électropneumatique ou électrique d'un véhicule, comprenant une pédale de frein de service, un poussoir (2) relié à la pédale de frein de service, une enveloppe (4), un piston (6) de poussoir monté mobile axialement dans l'enveloppe (4) et ayant un logement (3) de poussoir, dans lequel le poussoir (2) pénètre, un agencement (9) de ressort hélicoïdal, qui appuie axialement le piston (6) du poussoir sur un piston (10) de soupape actionnant une soupape à siège double ou sur une partie de l'enveloppe, dans lequel
a) la précontrainte de l'agencement (9) de ressort hélicoïdal est réglable au moyen d'une vis (11) de réglage,
**caractérisé en ce que**
b) un fût (20), ayant un filetage extérieur, de la vis (11) de réglage est vissé dans un taraudage en passant dans un trou (27) traversant d'une rondelle (16) Belleville, qui est en liaison avec le piston (6) du poussoir, le piston (10) de soupape ou la partie de l'enveloppe,
c) une tête (24) de la vis (11) de réglage s'applique au bord du trou (27) traversant de la rondelle (16) Belleville,
d) l'agencement (9) de ressort hélicoïdal s'appuie sur là rondelle (16) Belleville, laquelle est montée à transmission de force axiale par rapport au piston (10) de soupape, au piston (6) de poussoir ou à la partie d'enveloppe.

2. Dispositif à pédale de frein de service suivant la revendication 1, **caractérisé en ce que** la tête (24) de la vis (11) de serrage pénètre dans un trou (26) du piston (10) de soupape, du piston de poussoir ou de la partie d'enveloppe e't est guidée mobile axialement dans ce trou (26) .

3. Dispositif à pédale de frein de service suivant l'une des revendications précédentes, **caractérisé en ce qu'**au moins la vis (11) de serrage, la rondelle (16) Belleville, le piston (6) de poussoir, le piston (10) de soupape et l'agencement (9) de ressort hélicoïdal sont disposés coaxialement.

4. Dispositif à pédale de frein de service suivant l'une des revendications précédentes, **caractérisé en ce qu'**un élément (29) remplaçable de mise à distance est disposé entre la rondelle (16) Belleville et le piston (10) de soupape ou le piston (6) de poussoir.

5. Dispositif à pédale de frein de service suivant l'une des revendications précédentes, **caractérisé en ce que** l'agencement (9) de ressort hélicoïdal a plusieurs ressorts (5, 7) hélicoïdaux disposés parallèlement.

6. Dispositif à pédale de frein de service suivant la revendication 5, **caractérisé en ce qu'**un premier ressort (5) hélicoïdal est toujours précontraint par la vis (11) de réglage entre le piston (6) de poussoir et la rondelle (16) Belleville, mais un deuxième ressort (7) hélicoïdal s'appuie, par l'une de ses extrémités, sur la rondelle (16) Belleville et ne vient en contact avec le piston (6) de poussoir, par son autre extrémité, qu'après parcours d'une course déterminée du piston (6) de poussoir.

7. Dispositif à pédale de frein de service suivant la revendication 6, **caractérisé en ce que** le ressort (5) hélicoïdal et/ou le ressort (7) hélicoïdal de l'agencement (9) de ressort hélicoïdal est en un matériau paramagnétique.

8. Dispositif à pédale de frein de service suivant l'une des revendications précédentes, **caractérisé en ce que** la liaison filetée formée du taraudage et du filetage de la vis (11) de réglage est une liaison filetée autobloquante.

9. Dispositif à pédale de frein de service suivant l'une des revendications précédentes, **caractérisé en ce qu'**il est prévu des moyens de sécurisation de la liaison filetée formée du taraudage et du filetage de la vis (11) de réglage.

10. Dispositif de frein de service électrique ou électropneumatique d'un véhicule, comportant un dispositif (1) à pédale de frein de service suivant l'une des revendications précédentes.

11. Véhicule comportant un dispositif de frein de service électrique ou électropneumatique suivant la revendication 10.
